# EUROPEAN PATENT APPLICATION

(11) **EP 3 640 405 A1**
(43) Date of publication of application: **22.04.2020**
(21) Application number: 18201463.9
(22) Date of filing: 19.10.2018
(51) Int. Cl.: E03C 1/04, F16K 31/36, F16K 31/38, F16K 11/074, B05B 1/18

(54) **SYSTEM FOR OPENING AND CLOSING WATER FOR A SHOWER HEAD, HAND SHOWER OR A BATHROOM OR KITCHEN MIXER**

(71) Applicant: Nobili, Fabrizio, 6534 San Vittore (CH)
(72) Inventor: Nobili, Fabrizio, 6534 San Vittore (CH)
(74) Representative: Zardi, Marco

(57) **Abstract**

A system for opening and closing water for a shower head, hand shower or a bathroom or kitchen mixer is described, said system comprising an inlet (1) for water supplied from a water supply network; an outlet (22) for water directed towards said shower head, hand shower or bathroom or kitchen mixer; a valve (3) situated along the fluid flow path between the inlet (1) and the outlet (22) and comprising a valve body (12) intended to receive water from the inlet (1) and a closing member (13) movable inside the valve body (12). The valve body (12) comprises a discharge hole (5) hydraulically connected to the inlet (6A) of a duct (6); a secondary valve (4), situated at a distance from the valve (3), is hydraulically connected to an outlet (6b) of the duct (6), so as to open or close the outlet (6b) of the duct (6); the closing member (12) is designed to be operated, between the position for opening and the position for closing the flow, by means of opening or closing of the secondary valve (4).

## Description

### Field of application

The present invention relates to a system for opening and closing water for a shower head, hand shower or a bathroom or kitchen mixer, comprising an inlet for water supplied from a water supply network, an outlet for water directed towards the shower head, hand shower or bathroom or kitchen mixer, and a valve movable between a position for opening and a position for closing the flow through the outlet.

The present invention also relates to a method for opening and closing the water in a shower head, hand shower or a bathroom or kitchen mixer.

### Prior art

Systems for opening and closing the water for a shower head, a hand shower or a bathroom or kitchen mixer are known. These systems may be inserted concealed, for example inside the body of a shower panel or underneath the surface of the sink and comprise an inlet for water supplied from a water supply network and an outlet for water directed towards the shower head, the hand shower or the bathroom or kitchen mixer.

In these systems opening and closing of the water is controlled by a valve sliding between a position for opening and a position for closing the flow through the outlet. In particular the opening system comprises a body which defines a fluid flow from the inlet to the outlet, and the valve is slidable along an axis X in the body, so as to intercept the water in a predefined closing position along the axis X or release the water in another opening position along the axis X.

In these systems the valve is controlled by a pushbutton mounted above the valve and also axially slidable along the axis X, so as to cause axial displacement of the valve. Only a distal portion of the pushbutton projects or is flush with the surface of the shower panel facing the user or flush with the surface of the sink, and a remaining portion which has the function of operating the valve may remain hidden below the surface of the sink or inside the shower panel.

These systems are favourably regarded since they conceal in an elegant manner the pushbutton, the valve body and the valve below the surface of the sink or the shower panel and since they control the valve electronically, i.e. without the aid of mechanical components. However, they have a number of drawbacks, in particular associated with the volume of the portion of the pushbutton which remains below the surface of the sink or the shower panel, together with the valve body and the valve.

The technical problem underlying the present invention is that of devising a system for opening and closing water which is of the mechanically operated type, i.e. without electrical components and designed to operate without an electric power supply, and is extremely compact, i.e. allowing the volume of the shower panel or the space occupied underneath the surface of the sink to be reduced, overcoming all the drawbacks hitherto associated with the known systems.

### Summary of the invention

The idea underlying the present invention is that of controlling remotely, i.e. at a distance, a valve of a system for opening and closing water for a shower head, hand shower or a bathroom or kitchen mixer, by separating a valve control pushbutton from the valve body.

The expression "at a distance" is used in a non-limiting sense and comprises the configurations of the system according to the present invention, in which the control pushbutton is arranged substantially alongside the valve or the configurations in which the pushbutton is at a distance of tens of centimetres or metres from the valve body. The control pushbutton is hydraulically connected to the valve, for example, by means of a flexible or rigid pipe, which may be coaxial or not coaxial with the axis of the valve, parallel or not parallel with the axis of the valve, etc.

According to the proposed solution mentioned above, the technical problem underlying the present invention is solved by a system for opening and closing water for a shower head, hand shower or a bathroom or kitchen mixer, comprising:
- an inlet for water supplied from a water supply network;
- an outlet for water directed towards a shower head, hand shower or bathroom or kitchen mixer;
- a valve situated along the fluid path between the inlet and outlet and comprising a valve body intended to receive water from the inlet, and a closing member, movable inside the valve body between a position for opening and a position for closing the flow through the outlet;
characterized in that:
- the valve body comprises a discharge hole hydraulically connected to the inlet of a duct;
- a secondary valve, situated at a distance from the valve, is connected hydraulically to an outlet of the duct, in order to release or interrupt the flow through the duct outlet;
- said closing member (13) being operated, between a position for opening and a position for closing the flow, by means of opening or closing of the secondary valve.

In particular, the closing member comprises a disc and an elastic membrane mounted on the disc. The elastic membrane comprises an outer annular segment which is fixed to the valve body and divides a top portion of the valve body from a bottom portion of the valve body. During use, opening and closing of the secondary valve results in a reduction or an increase in the water pressure in the top portion of the valve body, i.e. the water pressure on the upper surface of the disc and the elastic membrane.

The valve body comprises a water inlet, and the disc and/or the elastic membrane comprise at least one hole for allowing water to pass between the bottom portion and the top portion of the valve body. During use, when the inlet 1 of the system is connected to the supply pipes of the water supply network, and the secondary valve is in the closed position, the upper surface of the disc and the elastic membrane are subject substantially to the same network pressure acting on the bottom portion of the disc and the elastic membrane. Even if the duct 6 is full of water, there is no flow through it because this flow is prevented by the secondary valve.

The discharge hole and the duct are in fluid communication with the inlet; the valve and the secondary valve do not intercept the fluid flow path between the inlet, the discharge hole and the inlet of the duct. The discharge hole preferably has a diameter of between 0.3 and 2 mm.

With opening of the secondary valve, the flow starts to pass through the duct and top portion of the valve body starts to be emptied as a result of the pressure exerted by the incoming water on the lower surface of the disc and the membrane, which is greater than the pressure exerted on the upper surface of the disc and the membrane.

According to a preferred embodiment, the outer annular segment of the elastic membrane forms a seal between a first component of the valve body comprising the discharge hole and a second component of the valve body, and the elastic membrane further comprises an inner annular segment, intended to close an outlet of the valve body, and an intermediate annular segment, which is extendable between the outer annular segment and the inner annular segment.

According to various embodiments which fall within the scope of protection of the invention, the duct may be a flexible or rigid pipe or formed in a monobloc unit for housing the valves. In particular, the system may comprise a monobloc unit for installation of the valve and the secondary valve and the duct may be formed by a fluid flow path inside the monobloc unit.

The valve and the secondary valve comprise a respective closing member and an axis of displacement of the closing member of one valve is not coaxial with an axis of displacement of the closing member of the other valve.

In an embodiment, the axis of displacement of the closing member of one valve is not parallel with the axis of displacement of the other valve.

Preferably, the secondary valve has its outlet in communication with the other outlet so as to convey also the water supplied by the duct towards said shower head, hand shower or bathroom or kitchen mixer.

The secondary valve comprises preferably a bistable pushbutton which can be switched alternately so as to open or close the duct.

The aforementioned technical problem is also solved by a secondary valve for a system for opening and closing water for a shower head, hand shower or a bathroom or kitchen mixer, comprising an inlet for water supplied from a water supply network and an outlet for water directed towards said shower head, hand shower or bathroom or kitchen mixer;
characterized in that it comprises:
- a connection for a duct intended to be hydraulically connected to a discharge hole in the valve body of a valve, situated at a distance from the secondary valve, the secondary valve being movable between a position for opening the duct and a position for closing the duct corresponding respectively to opening and closing of the valve situated at a distance.

The aforementioned technical problem is also solved by a valve for a system for opening and closing water for a shower head, hand shower or a bathroom or kitchen mixer, comprising an inlet for water supplied from a water supply network and an outlet for water directed towards said shower head, hand shower or bathroom or kitchen mixer; the valve comprising a valve body and a closing member movable between a position or closing the flow from the inlet to the outlet; characterized in that the valve body comprises a discharge hole intended to be hydraulically connected to a duct for supplying a secondary valve situated at a distance, so as perform opening or closing of the valve.

Finally, the aforementioned technical problem underlying the present invention is solved by a method for opening and closing the water in a shower head, hand shower or a bathroom or kitchen mixer, comprising an inlet for water supplied from a water supply network; an outlet for water directed towards said shower head, hand shower or bathroom or kitchen mixer; a valve situated along the fluid path between the inlet and the outlet and comprising a valve body intended to receive water from the inlet, and a closing member movable in the valve body; and characterized by the following steps:
- operating the closing member between the position for opening and the position for closing the flow, by means of displacement of a secondary valve so as to close or open an outlet of a duct having an inlet hydraulically connected to a discharge hole of the valve.

Further characteristic features and advantages of the opening and closing system, the valve and the secondary valve and the opening or closing method according to the present invention will become clear from an example of embodiment provided solely by way of a non-limiting example with reference to the attached drawings.

### Brief description of the drawings

Figure 1 is a cross-sectional view of a water opening and closing system according to the present invention.
Figure 2 is an exploded perspective view of the water opening and closing system shown in Figure 1.
Figure 3 is another exploded perspective view of the water opening and closing system shown in Figure 1.

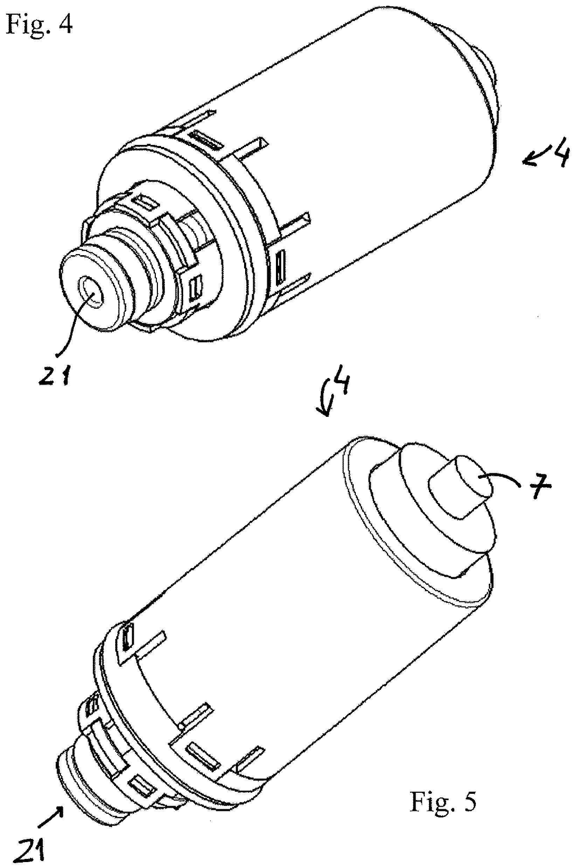

Figures 4 and 5 are perspective views a secondary valve of the water opening and closing system shown in Figure 1.
Figure 6 is a front view of the secondary valve shown in Figure 4;
Figure 7 is a cross-sectional view of the secondary valve shown in Figure 4;
Figures 8-10 are exploded perspective views of the secondary valve shown in Figure 7.
Figure 11 is a cross-sectional view of the secondary valve shown in Figure 10.

### Detailed description of the invention

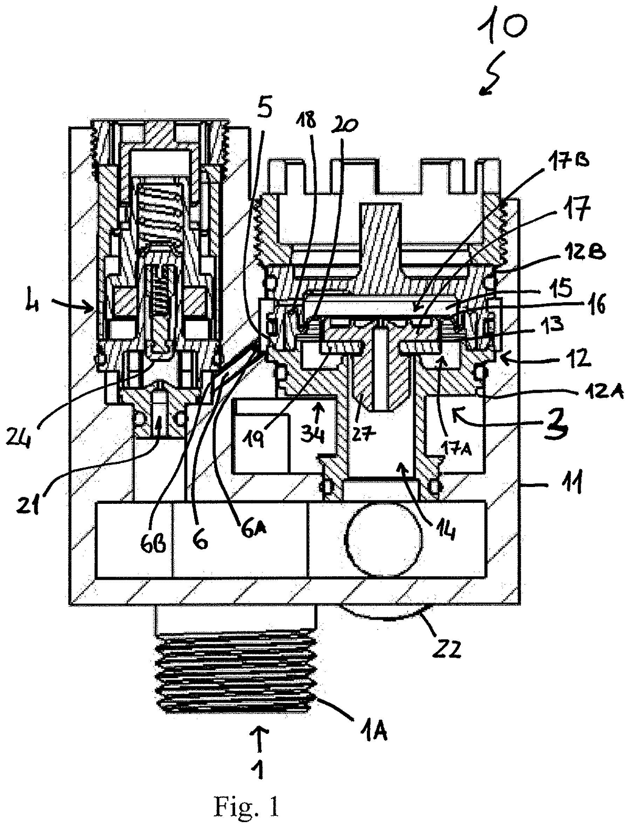

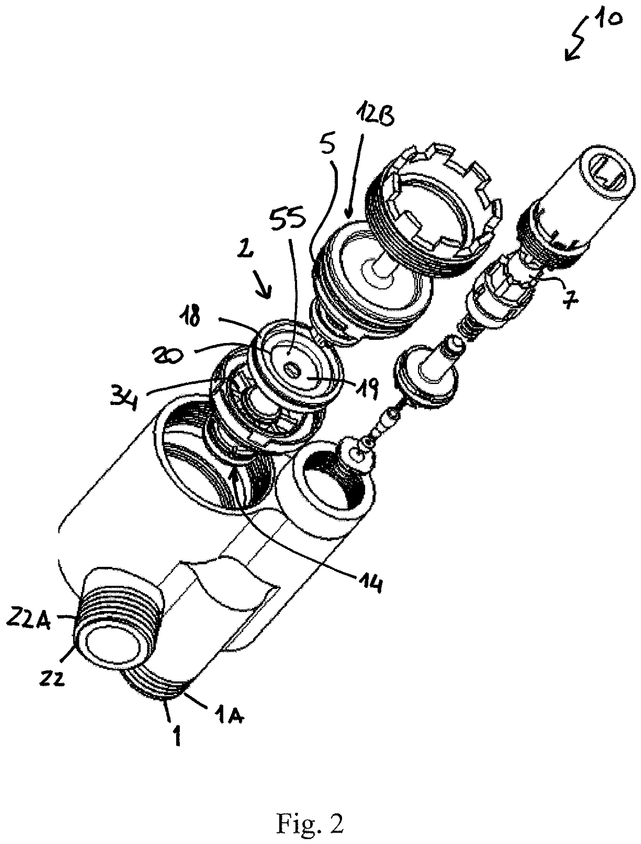

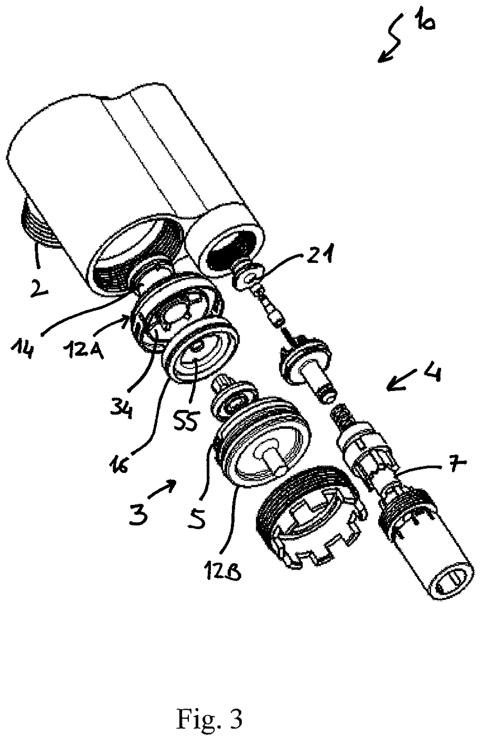

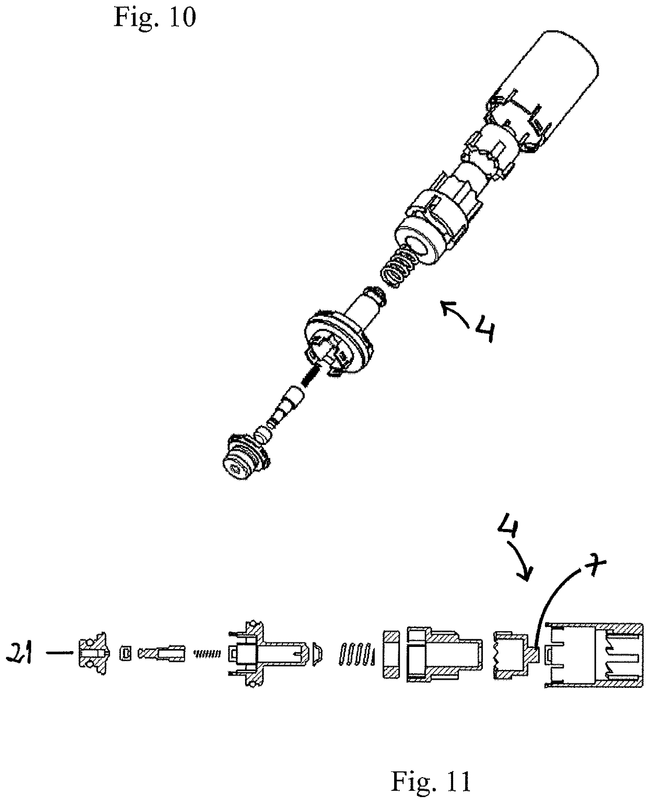

With reference to the attached Figures 1-3, 10 denotes in schematic form a system for opening and closing water for a shower head, hand shower or a bathroom or kitchen mixer according to the present invention, in particular a system designed to be concealingly inserted, for example, in the body of the shower panel or underneath the surface of the sink, leaving visible only the pushbutton used to perform opening and closing of the water, preferably a pushbutton intended to remain flush with the visible surface of the shower or with the surface of the sink.

The system 10 comprises a water inlet 1 intended to be connected to pipes for supplying the water supplied from a water supply network, for example an inlet 1 comprising a threaded portion 1a which is able to receive, screwed onto it, a flexible pipe for supplying hot water or cold water or water already mixed at a predefined temperature and in some cases with an already regulated flowrate.

In the specific example of embodiment shown in Figures 1-3, the system 10 comprises a monobloc unit 11 which incorporates the inlet 1 and a water outlet 22, for example an outlet 22 comprising a threaded union 22a for pipes supplying the water towards the shower head, the hand shower or the bathroom or kitchen mixer, and which forms within a single block a fluid flow path between the inlet 1 and outlet 22. In other embodiments of the invention, the inlet 1, the outlet 22 and the fluid path may be formed without using a monobloc unit 11 of the type shown in Figures 1-3, for example employing several components.

The system 1 comprises a valve 3 for shutting off the flow between the inlet 1 and the outlet 22.

With reference to Figure 1, the valve 3 comprises a valve body 12 which defines a receiving seat 15 for a closing member 13 associated with an elastic membrane 16. The valve body 12 is for example formed by a first component 12a and a second component 12b which are designed to be assembled together enclosing the closing member 13 and defining the receiving seat 15. The valve body has an inlet 34 and an outlet 14 in fluid communication with the outlet 22 of the system. The inlet 34 is for example formed by a circle segment of the first component 12a situated outside a second inner circle segment which forms the outlet 14.

During operation, as schematically shown in Figure 1, the closing member 13 closes the outlet 14 in the valve body 12, blocking off the outlet 14. During use in this operating phase the closing member 13 prevents the delivery of water towards the outlet 22.

During a different operating phase (not shown), the closing member 13 is situated in a top part of the receiving seat 15 and frees the outlet 14 in the valve body 12 so as to allow the delivery of the water to the outlet 22.

More particularly, the elastic membrane 16 is applied to a disc 17 of the closing member 13. Once the parts have been assembled, the elastic membrane 16 is arranged between the first component 12a and the second component 12b of the valve body 12, forming a seal between them. In particular an outer annular segment 18 of the elastic membrane 16 forms a seal between the first component 12a and the second component 12b, an inner annular segment 19 is designed to form a seal on the outlet 14 of the valve body, during the operating phase where the closing member 13 closes said outlet, and an intermediate annular segment 20 situated between the outer segment 18 and the inner segment 19 is extendable, allowing displacement of the closing member 13 between the position for closing and the position for opening the outlet 14.

The lower surface 17a and the upper surface 17b of the disc 17 and the elastic membrane 16 are intended to remain exposed to the water entering the valve 3. In particular, the upper surface 17b is bigger than or the same size as the lower surface 17a. A guide head 27 preferably projects from the disc 17 and is at least partially inserted inside the outlet 14 and therefore is not intended to be exposed to the water entering upstream of the valve 3.

The elastic membrane 16 comprises at least one hole 55 situated for example on the inner annular segment 19. The hole 55 has a very small diameter for example 0.1 - 0.9 mm. During use, the water enters from the inlet 34 of the first component 12a of the valve body 12 and flows through the hole 55 of the elastic membrane into the second component 12b.

The displacement of the closing member 13 into the opening or closing position is determined by a variation in the pressure of the water in the valve body 12.

In particular the valve 3 comprises one at least one discharge hole 5 for discharging water towards the inlet 6a of a duct 6, which is controlled by a secondary valve 4. The discharge hole 5 is formed preferably in a sidewall of the second component 12b of the valve body 12, opposite which the inlet 6a of the duct 6 is situated or is mounted. The second component 12b does not have other outlets, besides the aforementioned at least one discharge hole 5 directed towards the duct 6.

The secondary valve 4 is situated at a distance from the valve 3 and is hydraulically connected to an outlet 6b of the duct 6, so as to control the water flow through the outlet 6b of the duct 6.

As indicated above, the valve 3 is operated, between the opening position and the closing position, by means of a variation of the water pressure caused by closing or opening of the secondary valve 4, as described in greater detail hereinbelow.

The secondary valve 4 has an outlet 21 controlled by a closing member 24. Preferably, the outlet 21 of the secondary valve 4 is hydraulically connected to the outlet 22 of the system 10. The water flow through the duct 6 is interrupted if the outlet 21 is closed by the closing member 24. In this case, during use, the pressure of the water on the lower surface 17A of the disc 17 and the elastic membrane 16 in the valve 3 is less than (or the same as) as the pressure exerted on the upper surface 17b of the disc 17 and the elastic membrane and pushes (or keeps) the closing member against the outlet 14, closing it. Preferably, the outer annular segment 19 of the elastic membrane 16 is situated inside an annular seat of the second component 12b and the first component 12a is joined together with the second component 12b so that the inner annular segment 19 of the membrane is in the closing position on the outlet 14 when the intermediate annular segment 20 of the membrane is in the rest condition.

The water flow through the duct 6 is freed if the closing member 24 frees the outlet 21. In this case, during use, the pressure of the water on the lower surface 17a of the disc 17 and the elastic membrane 16 is greater than the pressure on the upper surface 17b, owing to the discharge of water through the discharge hole 5 of the first component 12a, and moves the closing member 13 away from the outlet 14, opening it.

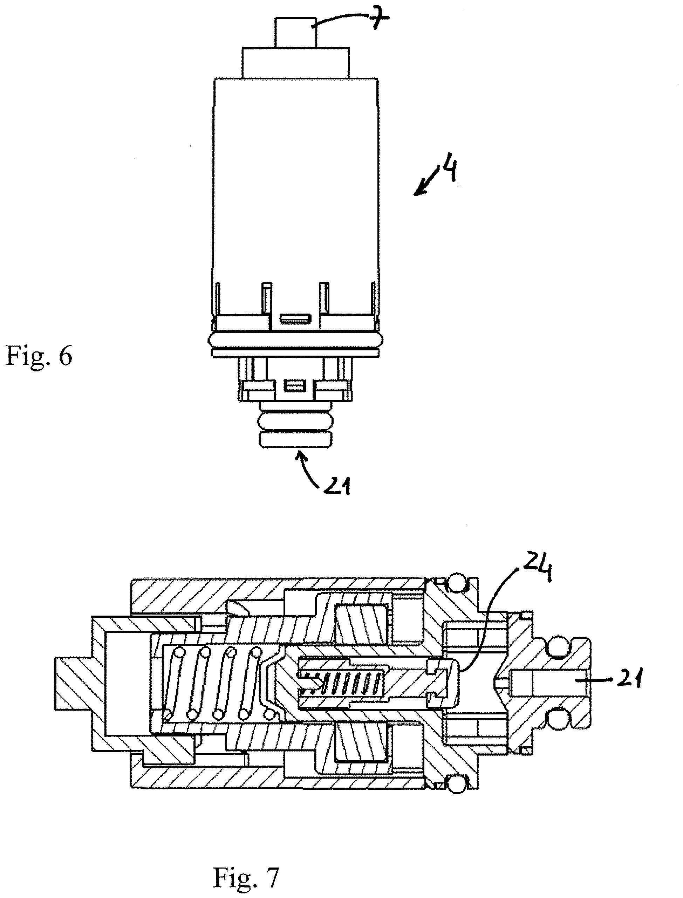

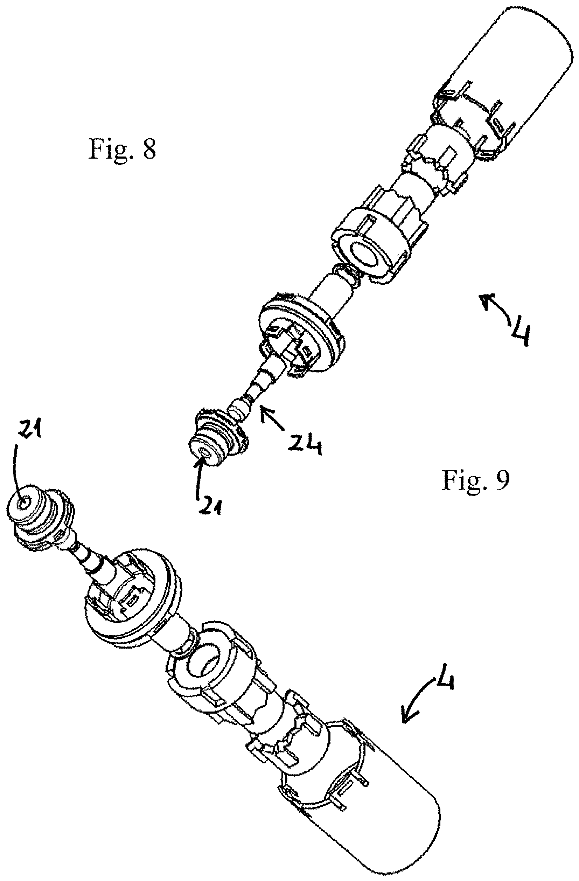

Therefore, opening and closing of the valve 3 is controlled remotely by means of successive operation of the secondary valve 4 into the open and closed positions. The secondary valve 4 comprises a manually operated pushbutton 7, shown in Figures 7-11, which has the function of switching the secondary valve 4 into the open and closed position alternately, whenever operated.

In the example of embodiment shown in the figures, the secondary valve 4 is mounted inside the monobloc unit 11 which also forms the duct 6 for hydraulically connecting together the discharge hole 5 on the side wall of the first component 12a and the inlet of the secondary valve 4. However, according to other embodiments, the valve 3 and the secondary valve 4 may be provided separately and associated with respective valve bodies, and the duct 6 may be a rigid or flexible pipe which hydraulically connects the discharge hole 5 of the valve 3 to the inlet of the secondary valve 4. Similarly, the outlet of the secondary valve may flow into a return duct (not shown) formed by means of a flexible or rigid pipe which conveys the water output from the secondary valve 4 to the outlet of the valve 3.

## Claims

**1.** System for opening and closing water for a shower head, hand shower or a bathroom or kitchen mixer, comprising:
- an inlet (1) for water supplied from a water supply network;
- an outlet (22) for water directed towards said shower head, hand shower or bathroom or kitchen mixer;
- a valve (3) situated along the fluid flow path between the inlet (1) and the outlet (22) and comprising a valve body (12) intended to receive water from the inlet (1) and a closing member (13) movable inside the valve body (12) between a position for opening and a position for closing the flow through the outlet (22);
**characterized in that** the valve body (3) comprises a discharge hole (5) hydraulically connected to the inlet (6A) of a duct (6);
- a secondary valve (4) situated at a distance from the valve (3) is hydraulically connected to an outlet (6b) of the duct (6), so as to open or close the outlet (6b) of the duct (6);
- said closing member (13) being operated, between a position for opening and a position for closing the flow, by means of opening or closing of the secondary valve (4).

**2.** System according to claim 1, **characterized in that** said duct is a flexible or rigid pipe.

**3.** System according to claim 1, **characterized in that** it comprises a monobloc unit for installation of the valve (3) and the secondary valve (4) and **in that** said duct (6) is formed by a fluid flow path inside the monobloc unit.

**4.** System according to claim 1, **characterized in that** said valve (3) and said secondary valve (4) comprise a respective closing member (3a, 4a), and an axis of displacement (X) of the closing member (3a) of the valve (3) is not coaxial with an axis of displacement (X) of the closing member (4a) of the valve (4).

**5.** System according to claim 4, **characterized in that** the axis of displacement (X) of the closing member (3a) of the valve (3) is not parallel with the axis of displacement (X) of the closing member (4a) of the valve (4).

**7.** System according to claim 1, **characterized in that** the discharge hole (5) and the duct (6) are in fluid communication with the inlet (1), and the valve (3) and the secondary valve (4) do not intercept the fluid flow path between the inlet (1), the discharge hole (5) and the inlet (6a) of the duct (6).

**8.** System according to claim 1, **characterized in that** the secondary valve (4) has an outlet (21) in communication with the outlet (22), so as to convey also the water delivered from the duct (6) towards said shower head, hand shower or bathroom or kitchen mixer.

**9.** System according to claim 1, **characterized in that** said secondary valve (4) comprises a bistable pushbutton (7) which can be switched alternately so as to open or close the duct (6).

**10.** System according to claim 1, **characterized in that** the closing member (13) comprises a disc (17) and an elastic membrane (16) mounted on the disc (17), said elastic membrane (16) comprising an outer annular segment (18) which is fixed to the valve body (12) and which separates a top portion of the valve body (12) from a bottom portion of the valve body (12).

**11.** System according to claim 10, **characterized in that** the valve body (12) comprises a water inlet (34) and the disc (17) and/or the elastic membrane (16) comprise at least one hole (55) for allowing water to pass between the bottom portion and the top portion of the valve body (12).

**12.** System according to claim 10, **characterized in that** the outer annular segment (18) of the elastic membrane (16) forms a seal between a first component (12a) of the valve body (12) comprising the discharge hole (5) and a second component (12b) of the valve body (12), and the elastic membrane further comprises an inner annular segment (19) intended to close an outlet (14) of the valve body (12, and an intermediate annular segment (20) extendable between the outer annular segment (18) and the inner annular segment (19).

**13.** Secondary valve (4) for a system for opening and closing water for a shower head, hand shower or a bathroom or kitchen mixer, comprising an inlet (1) for water supplied from a water supply network and an outlet (22) for water directed towards said shower head, hand shower or bathroom or kitchen mixer;
**characterized in that** it comprises:
- a connection for a duct (6) intended to be hydraulically connected to a discharge hole in the valve body (12) of a valve (3), situated at a distance from the secondary valve (4), the secondary valve (4) being movable between a position for opening the duct (6) and a position for closing the duct (6) corresponding respectively to opening and closing of the valve (3) situated at a distance.

**14.** Valve (3) for a system for opening and closing water for a shower head, hand shower or a bathroom or kitchen mixer, comprising an inlet (1) for water supplied from a water supply network and an outlet (22) for water (22) directed towards said shower head, hand shower or bathroom or kitchen mixer; said valve (3) comprising a valve body (12) and a closing member (13) movable between a position for opening or closing the flow from the inlet (1) to the outlet (22);
**characterized in that** the valve body (12) comprises a discharge hole (5) intended to be hydraulically connected to a duct (6) for supplying a secondary valve (4) situated at a distance, so as to perform opening or closing of the valve (3).

**15.** Method for opening and closing the water in a shower head, a hand shower or a bathroom or kitchen mixer, comprising an inlet (1) for water supplied from a water supply network;
- an outlet (22) for water directed towards said shower head, hand shower or bathroom or kitchen mixer;
- a valve (3) situated along the fluid flow path between the inlet (1) and the outlet (22) and comprising a valve body (12) intended to receive water from the inlet (1) and a closing member (13) movable inside the valve body (12); **characterized by**:
- operating the closing member (13) between the position for opening and the position for closing the flow, by means of displacement of a secondary valve (4) so as to close or open an outlet (6b) of a duct (6) having an inlet (6a) hydraulically connected to a discharge hole (5) of the valve (3).
